# EUROPÄISCHE PATENTANMELDUNG

(11) **EP 1 387 160 A2**
(43) Veröffentlichungstag der Anmeldung: **04.02.2004**
(21) Anmeldenummer: 03010148.9
(22) Anmeldetag: 06.05.2003
(51) Int. Cl.: G01M 17/007

(54) **Vorrichtung zur Aufnahme eines Fahrroboters in einem Kraftfahrzeug**

(30) Priorität: 31.07.2002 DE 10234800
(71) Anmelder: Stähle, Kurt, 75242 Neuhausen-Steinegg (DE)
(72) Erfinder: Stähle, Kurt, 75242 Neuhausen-Steinegg (DE)
(74) Vertreter: Frank, Gerhard, Dipl.-Phys.

(57) **Zusammenfassung**

Eine Vorrichtung zur Aufnahme eines Fahrroboters in einem Kraftfahrzeug weist mindestens ein Arretierelement (21,22) auf, mit dem/denen eine als Montageplatte dienende Sitzplatte (10) in einer für die Funktion des Fahrroboters geeigneten Position durch den Fahrersicherheitsgurt des Kraftfahrzeugs auf dem Fahrersitz (F) gehalten wird.

Anstelle der üblichen Fahrroboter-spezifischen Halte- oder Stützeinrichtungen wird somit der ohnehin in allen Fahrzeugen vorhandene Fahrer-Sicherheitsgurt zur Fixierung und Justierung der Sitzplatte herangezogen, dessen Funktion somit sinnvoll erweitert wird.

Ein besonderer Vorteil der erfindungsgemäßen Lösung besteht auch darin, dass Fahrroboter verschiedener Auslegung und Funktionsbereiche zuverlässig auf dem Fahrersitz befestigt werden können.

## Beschreibung

### Technischer Hintergrund

Die Erfindung betrifft eine Vorrichtung gemäß dem Oberbegriff des Patentanspruchs 1.

### Stand der Technik

Fahrroboter sind beispielsweise aus der DE 39 40 588 A1 bekannt. Sie bestehen in der Regel aus einem Gehäuse, das auf dem Fahrersitz zu befestigen ist, und an diesem Gehäuse befestigte Betätigungselemente für das Lenkrad und/oder die Fußpedale des Kraftfahrzeuges.

Als Verbindung dieses Gehäuses zum Fahrersitz ist eine Sitzplatte vorgesehen, die einen Sitzabschnitt und einen Lehnenabschnitt aufweist und über eine längenverstellbare Stützvorrichtung an den jeweiligen Fahrersitz anpassbar ist.

Die Präzision und Wirksamkeit der während des bestimmungsgemäßen Betriebs eines derartigen Fahrroboters erfolgenden Stellbewegungen hängt auch von der einwandfreien Positionierung des Fahrroboters auf dem Fahrersitz und der Beibehaltung dieser Position ab. In der Regel ist somit jedem Fahrroboter eine Art Unterlage oder Stützvorrichtung zugeordnet, mit der er auf dem Fahrersitz mehr oder weniger zuverlässig und dauerhaft für den bestimmungsgemäßen Gebrauch positioniert wird.

Dies erfordert im Einzelfall Justierarbeiten, beispielsweise zur horizontalen Ausrichtung des Fahrroboters auf den oft relativ weichen nachgiebigen Fahrersitz.

Bei der genannten Druckschrift wird dieses Problem durch eine Stützstange gelöst, die den Fahrroboter am Lenkrad abstützt und die beim Betrieb des Fahrroboters auftretenden Reaktionskräfte in die Lenkachse einleitet. Auch hierfür ist eine individuelle Anpassung und Einstellung erforderlich.

### Darstellung der Erfindung

Aufgabe der Erfindung ist es, eine Möglichkeit zur Positionierung und Fixierung eines Fahrroboters zu schaffen, die eine einfachere und dennoch stabile und zuverlässige Basis zur Halterung eines Fahrroboters bildet, der dann auf eigene Befestigungs-, Stütz- oder sonstige Haltevorrichtungen verzichten kann.

Erfindungsgemäß wird diese Aufgabe gemäß dem kennzeichnenden Teil des Patentanspruchs 1 gelöst.

Der Grundgedanke der Erfindung ist daher darin zu sehen, dass anstelle Fahrroboter-spezifischer Halte- oder Stützeinrichtungen der ohnehin in allen Fahrzeugen vorhandene Fahrer-Sicherheitsgurt zur Fixierung und Justierung herangezogen wird. Anstelle Fahrzeug- und Roboter-spezifischer Stützmittel können einfache Halteelemente für den Fahrer-Sicherheitsgurt verwendet werden, dessen Funktion somit sinnvoll erweitert wird.

Gemäß einer bevorzugten Ausgestaltung sind zwei baugleiche Halteelemente vorgesehen, deren Funktionsprinzip im wesentlichen darin besteht, dass die beiden Endabschnitte des Fahrer-Beckengurts fixiert und derart gespannt werden, dass sowohl eine feste Halterung der Vorrichtung als auch eine Justierung des als Montageplatte dienenden Sitzabschnittes in horizontaler Richtung mit wenigen Handgriffen erzielt wird, so dass dann mittels beliebiger Rast-, Schraub- oder Klemmverbindungen der eigentliche Fahrroboter, der nicht Gegenstand der Erfindung ist, auf die erfindungsgemäße Vorrichtung aufgebracht werden kann, bei dem dann auf Stütz- oder Haltevorrichtungen an Bauteilen des Kraftfahrzeuges verzichtet werden kann.

Ein besonderer Vorteil der erfindungsgemäßen Lösung besteht somit darin, dass Fahrroboter verschiedener Auslegung und Funktionsbereiche über eine erfindungsgemäß "standardisierte" Vorrichtung als Montagemittel zuverlässig am Fahrersitz befestigt werden können.

Weitere vorteilhafte Ausgestaltungen sind weiteren Unteransprüchen zu entnehmen.

### Kurze Beschreibung der Zeichnungen

Ein bevorzugtes Ausführungsbeispiel der erfindungsgemäßen Vorrichtung wird nun anhand von Zeichnungen näher erläutert, es zeigen:
- Figur 1A und B:: Perspektivische Darstellungen der erfindungsgemäßen Vorrichtung mit den wesentlichen Bauteilen,
- Figur 2:: eine Frontansicht der Vorrichtung gemäß Figur 1 und 2 aus Richtung A der Figur 1,
- Figur 3:: das erste Arretierelement der Figuren 1 und 2,
- Figur 4:: das zweite Arretierelement der Figuren 1 und 2,
- Figur 5A und B:: Seitenansicht und Aufsicht auf die erfindungsgemäße Vorrichtung.

### Beschreibung des bevorzugten Ausführungsbeispiels

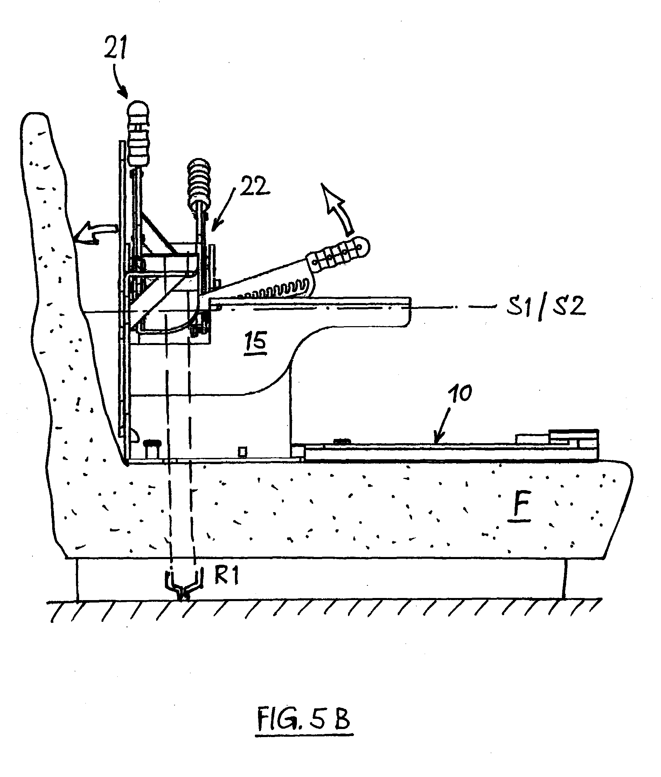

Die erfindungsgemäße Vorrichtung besteht aus einer Sitzplatte 10 als Montageplatte für den Fahrroboter zur Auflage auf dem Fahrersitz F, auf der senkrecht ein Stützprofil 15 tischartig sich erstreckt und eine Arretierplatte 20 zur Aufnahme von zwei Arretierelementen 21 und 22 bildet, sowie eine Lehnenplatte 30 (Figur 5B), die mittels eines Stellelementes 31 in ihrer Winkelneigung α gegenüber der Arretierplatte 20 zur Anpassung an die relative Neigung zwischen Fahrersitz F und Fahrersitzlehne L verschwenkbar ist (Figur 5B). Die Sitzplatte 10 weist Befestigungsmittel wie z.B. Bolzen, Stifte oder ähnliches auf, mit denen ein Fahrroboter befestigbar ist, sie dient somit als Montageplatte.

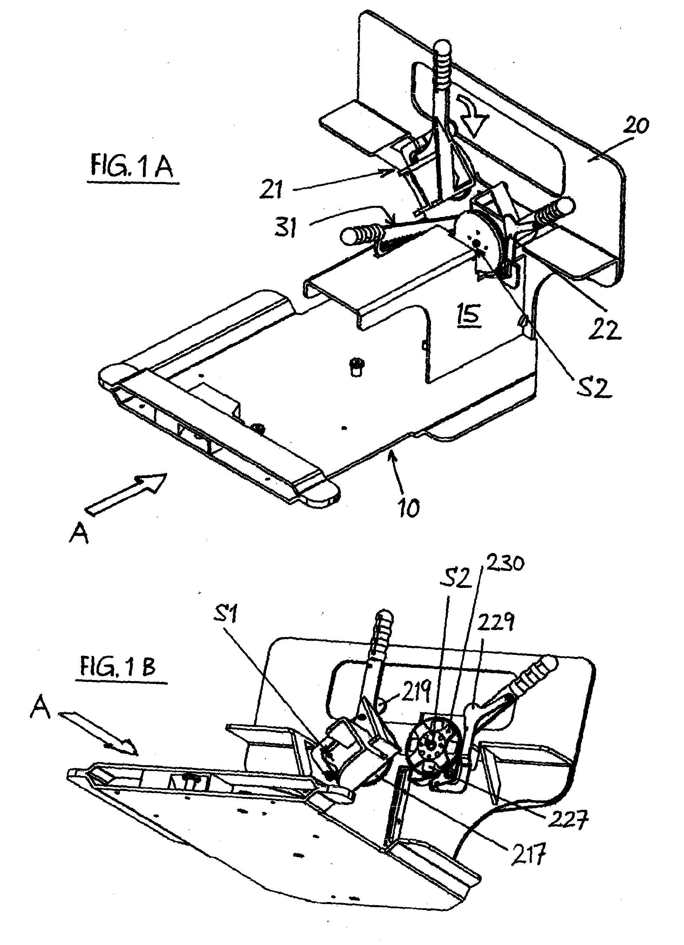

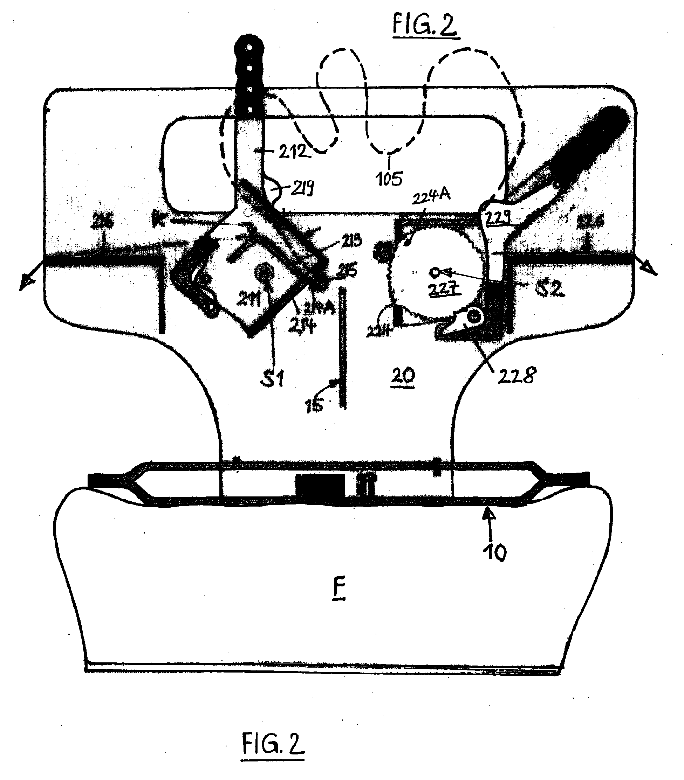

In der Arretierplatte 20 sind Schwenkachsen S1 und S2 im wesentlichen parallel zur Ebene der Sitzplatte 10 gehalten, um die das erste Arretierelement 21 und das zweite Arretierelement 22 in der in Figur 1A dargestellten Pfeilrichtung gegeneinander verschwenkbar gelagert sind. Die Arretierelemente dienen zur Aufnahme und zum Spannen des Beckengurtes 105 des Fahrer-Sicherheitsgurtes (Figur 2) und bilden somit den zentralen funktionalen Bestandteil der erfindungsgemäßen Vorrichtung, der nun im folgenden näher beschrieben wird:

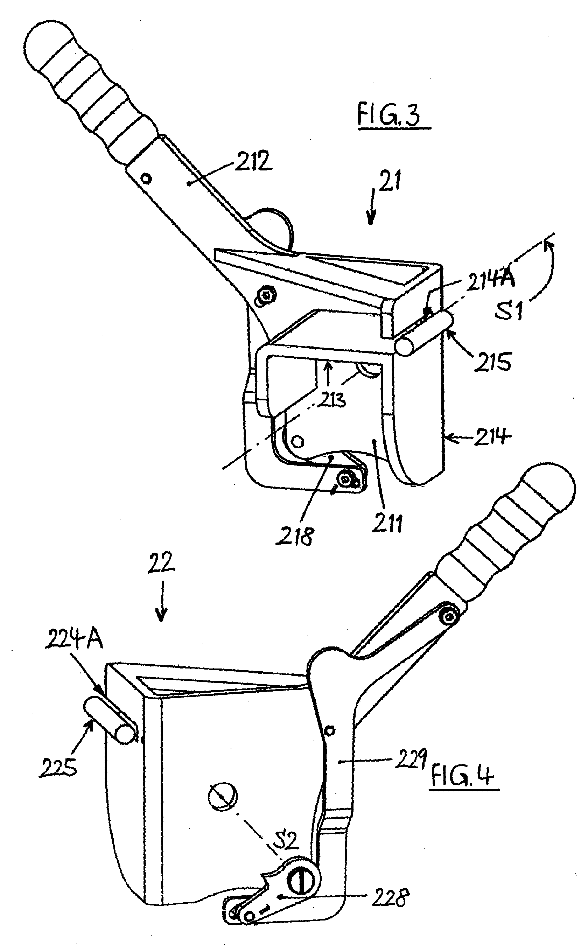

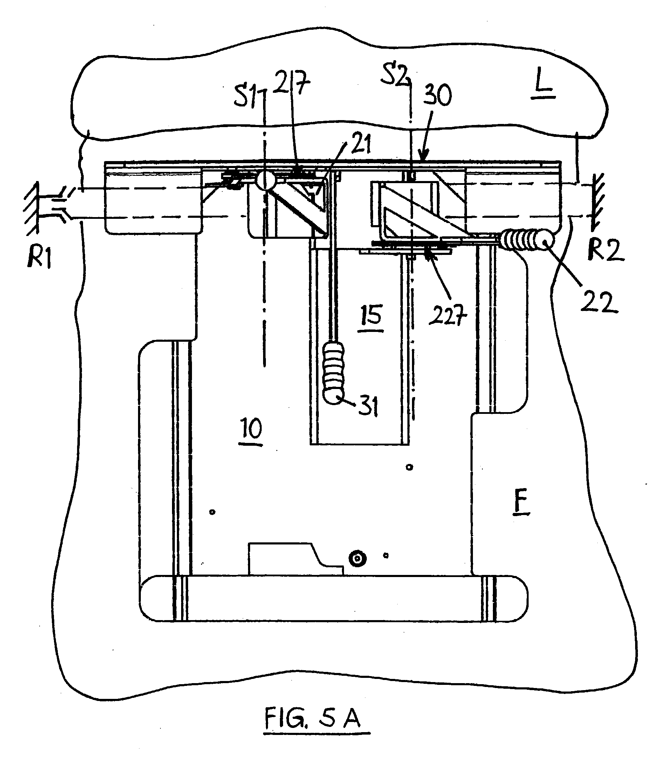

Die beiden Arretierelemente 21 und 22 sind beim dargestellten Ausführungsbeispiel baugleich ausgeführt und insbesondere aus den Figuren 2 bis 4 in ihrem Aufbau dargestellt. Sie sind gegeneinander spiegelversetzt oder verdreht in der Arretierplatte 20 der Vorrichtung schwenkbar um die Schwenkachsen S1 bzw. S2 gelagert.

Jedes Arretierelement 21,22 beinhaltet eine senkrecht zur Schwenkachse S1,S2 gehaltene Basisplatte 211/212, die im wesentlichen rechteckig ausgebildet ist. Von einem Eckbereich erstreckt sich in Richtung der Diagonale ein Griffabschnitt 212,222. Dieser Griffabschnitt 212/222 endet in einem Handgriff zur Verschwenkung des Arretierelementes 21,22 um seine Schwenkachse S1,S2.

Um aus dieser Verschwenkung eine Spannung des Beckengurtes 105 erzeugen zu können, sind folgende Bauteile vorgesehen:

Senkrecht auf der Basisplatte 211,212 ist eine Spannplatte 213,214 (letztere nicht dargestellt) montiert, die außerhalb der Schwenkachse S1, S2 gehalten ist. An ihrem vorderen Ende geht die Spannplatte 213 in eine Frontplatte 214 über, wobei ein Schlitz 214A,224A verbleibt. Unmittelbar vor diesem Schlitz befindet sich als Klemmelement ein Haltebügel 215,225. Die Anordnung dieser Bauteile ist so, dass jeweils ein Endabschnitt des Beckengurtes 105 nach Bildung einer Schlaufe in das aus Basisplatte und Spannplatte gebildete Profil eingelegt wird (Figur 2) und durch den Schlitz 214/224A hindurch um den Haltebügel 215,225 gelegt wird, wodurch eine Fixierung erreicht wird, die ein Verrutschen des Beckengurtes 105 um den Haltebügel 215/225 herum nicht mehr gestattet.

Etwa in Höhe der Schwenkachse S1/S2 befindet sich seitlich vom Arretierelement 21,22 eine Führungsplatte 216,226, über die der von der Gurtbefestigung R1,R2 verlaufende Beckengurt 105 geführt wird, bevor er in die beiden Arretierelemente eingelegt wird, so dass sich die insbesondere in den Figuren 2 und 5 dargestellte Anordnung ergibt, bei der der verbleibende Mittelabschnitt des Beckengurts 105 ohne mechanische Funktion schlaufenförmig zwischen den beiden Arretierelementen verläuft.

Auf der Schwenkachse S1,S2 und parallel zur Basisplatte sitzt ein mit einer Drehsicherungsplatte 230 fixiertes Zahnrad 217,227. Am Griffabschnitt 212,222 ist das eine Ende eines Auslegerarms 219,229 angelenkt, dessen anderes Ende gelenkig mit einer Sperrklinke 218,228 verbunden ist und mit dieser derart zusammenwirkt, dass bei einer Bewegung der Griffabschnitte 212,222 in der in Figur 1A dargestellten Pfeilrichtung die Sperrklinke 218,228 jeweils zahnweise im Zahnrad 217,227 weiter rückt und die Gegenschwenkbewegung sperrt. Durch Eindrücken des Auslegerarms 219,229 rückt die Sperrklinke 218,228 aus dem Zahnrad 217,227 aus und die Griffabschnitte 212,222 können zurück geschwenkt werden, der Beckengurt 105 wird frei gegeben.

Eine Verschwenkung des Arretierelementes führt durch die Geometrie zwischen Führungsplatte 216, Spannplatte 213 und Haltebügel 215 zu einer Spannung der beiderseitigen Endabschnitte des Beckengurtes 105, da der Abstand zwischen seinem jeweiligen Befestigungspunkt R1,R2 beidseitig des Fußbereichs des Sitzes F einerseits und seinem zugehörigen Haltebügel 215/225 stufenlos vergrößert wird, bis eine feste und horizontale Fixierung der Sitzplatte 10 auf dem Fahrersitz F und somit eine definierte Montageebene für einen Fahrroboter erreicht ist.

Diese Geometrie der Arretierelemente stellt in ihrer Funktion somit einen Spannhebel dar, bei dem die an der in geringem Abstand zur Schwenkachse S1, S2 angeordneten seitlichen Kante K der Spannplatte 213,223 aufzubringende Spannkraft für den Beckengurt 105 über den mit grösserem Abstand von der Schwenkachse befindlichen Handgriff aufgebracht wird, so dass hohe Spannkräfte erzeugt werden können.

## Patentansprüche

1. Vorrichtung zur Aufnahme eines Fahrroboters in einem Kraftfahrzeug, mit einem Montageabschnitt und mindestens einem Arretierelement (21,22) für den Fahrer-Sicherheitsgurt, mit dem/denen sie in einer für die Funktion des Fahrroboters geeigneten Position mit dem Fahrer-Sicherheitsgurt auf dem Fahrersitz (F) des Kraftfahrzeugs haltbar und positionierbar ist.

2. Vorrichtung nach A1, **dadurch gekennzeichnet, dass** das Arretierelement (21,22) mit mindestens einem Führungs- und/oder Klemmelement (213,215;223,225) ausgestattet ist, über den der Beckengurt (105) des Fahrer-Sicherheitsgurtes führbar und arretierbar ist.

3. Vorrichtung nach A1, **dadurch gekennzeichnet, dass** das Arretierelement einen Griffabschnitt (212,222) aufweist.

4. Vorrichtung nach Anspruch 1 - 3, **dadurch gekennzeichnet, dass** das Arretierelement (21,22) mit seinen Führungs- und Klemmelementen derart um eine Schwenkachse (S1,S2) bewegbar ist, dass sich bei Verschwenkung der Abstand zwischen dem fahrzeugseitigen Arretierungspunkt (R1,R2) des Beckengurtes (105) und dem Klemmelement (215,225) ändert.

5. Vorrichtung nach Anspruch 4, **dadurch gekennzeichnet, dass** die Winkelposition des Griffabschnitts (212,221) des Arretierelements (21,22) über ein Zahnrad (217,227) und eine Sperrklinke (218,228) in der Spannposition des Beckengurtes (105) gehalten wird.

6. Vorrichtung nach Anspruch 4 und 5, **dadurch gekennzeichnet, dass** dem Arretierelement (21,22) seitlich eine Führungsplatte (216,226) zugeordnet ist, über die der Bekkengurt (105) von seinem Arretierungspunkt (R1,R2) zu einer Spannplatte (213,223) geführt ist.

7. Vorrichtung nach Anspruch 1, **dadurch gekennzeichnet, dass** zwei baugleiche Arretierelemente (21,22) zur unabhängigen Spannung der beiden Enden des Beckengurts (105) vorgesehen sind, die gegeneinander derart versetzt auf einer Arretierplatte (20) angeordnet sind, dass ihre Verschwenkbewegungen zur Arretierung des Beckengurts (105) gegeneinander gerichtet sind.

8. Vorrichtung nach den vorhergehenden Ansprüchen, **dadurch gekennzeichnet, dass** die Bauteile der Arretierelemente (21,22) derart relativ zur Schwenkachse (S1,S2) angeordnet sind, dass die Arretierelemente (21,22) als Spannhebel für den Beckengurt (105) wirken.

9. Vorrichtung nach A1, **dadurch gekennzeichnet, dass** sie einen Lehnenabschnitt (30) aufweist, der gegenüber dem Sitzabschnitt (10) verschwenkbar und in einem relativen Zuordnungswinkel (α) fixierbar ist.
